# EUROPEAN PATENT APPLICATION

(11) **EP 4 737 958 A1**
(43) Date of publication of application: **06.05.2026**
(21) Application number: 23943259.4
(22) Date of filing: 30.10.2023
(51) Int. Cl.: G02B 6/00, G02B 5/18, G02B 27/01

(54) **LIGHT GUIDE DEVICE, OPTICAL MODULE, AND HEAD-MOUNTED DISPLAY DEVICE**

(30) Priority: 29.06.2023 CN 202310790430
(71) Applicant: Goertek Optical Technology (Shanghai) Co., Ltd., Shanghai 201109 (CN)
(72) Inventor: CHENG, Xin, Shanghai 201109 (CN)
(74) Representative: Rau, Schneck & Hübner Patentanwälte Rechtsanwälte PartGmbB
(86) International application number: PCT/CN2023/127501
(87) International publication number: WO 2025/000780

(57) **Abstract**

Embodiments of the present application provide a light-guiding device, an optical module, and a head-mounted display device; wherein, the light-guiding device includes a light-guiding substrate and an in-coupling area and an out-coupling area provided on the light-guiding substrate; the out-coupling area is configured to perform pupil expansion on light from the in-coupling area and couple it out; the out-coupling area includes at least one first strip grating with grooves, and there are provided at least two grooves which are disposed on opposite sides of the first strip grating, the grooves being capable of being used to induce additional diffraction orders from the first strip grating and form a target diffraction efficiency corresponding to the diffraction orders, so that light propagating to the position of the first strip grating can be changed from originally diffracting on a single side of the first strip grating to having additional diffraction orders induced on the other side of the first strip grating. The solution provided by the embodiments of the present application can enable reasonable distribution of light energy in the out-coupling area, and can improve optical efficiency and imaging quality.

## Description

### CROSS-REFERENCE TO RELATED APPLICATIONS

The present application claims priority to a Chinese patent application No. 202310790430.7 filed with the China National Intellectual Property Administration on June 29, 2023 and entitled "LIGHT-GUIDING DEVICE, OPTICAL MODULE, AND HEAD-MOUNTED DISPLAY DEVICE", which is incorporated herein by reference in its entirety.

### TECHNICAL FIELD

Embodiments of the present application relate to the technical field of optical imaging, and more particularly, to a light-guiding device, an optical module, and a head-mounted display device.

### BACKGROUND

In existing diffractive optical waveguide solutions, an in-coupling region and an out-coupling region are respectively provided on the waveguide substrate. Currently, the structures of all gratings within the out-coupling region are identical; therefore, the diffraction efficiency for coupling out light is uniform across different positions within the out-coupling region. However, since the total energy of the light is constant, the light energy at the edge and trailing end portions of the out-coupling region progressively decreases during light transmission, causing the coupled-out light energy to diminish accordingly. This results in non-uniform image intensity and low overall optical efficiency.

### SUMMARY

An objective of the present application is to provide a new technical solution for a light-guiding device, an optical module, and a head-mounted display device, thereby achieving different diffraction efficiencies in different areas within the out-coupling area.

In a first aspect, the present application provides a light-guiding device. The light-guiding device includes a light-guiding substrate and an in-coupling area and an out-coupling area provided on the light-guiding substrate;
the out-coupling area is configured to perform pupil expansion on light from the in-coupling area and couple it out; and
the out-coupling area includes at least one first strip grating with grooves, and at least two grooves are provided on opposite sides of the first strip grating, the grooves being capable of being used to induce additional diffraction orders from the first strip grating and form a target diffraction efficiency corresponding to the additional diffraction orders, so that light propagating to the position of the first strip grating can be changed from originally diffracting on a single side of the first strip grating to having additional diffraction orders induced on the other side of the first strip grating.

Optionally, the out-coupling area includes a plurality of mutually independent sub-out-coupling areas; and
the first strip grating is provided in plurality, and is located in at least one of the sub-out-coupling areas to form a transition grating area between a two-dimensional grating area and a one-dimensional grating area.

Optionally, in one sub-out-coupling area, the first strip grating is provided in plurality;
wherein, the plurality of first strip gratings are adjacent and spaced apart from each other, to form a partitioned arrangement within the sub-out-coupling area; or,
the plurality of first strip gratings are adjacent and sequentially connected to each other, to form an integral whole within the sub-out-coupling area.

Optionally, a width of the first strip grating is L, and a groove depth of the groove is ≤ L;
when the groove depth of the groove is L, the groove extends through the first strip grating in a width direction of the first strip grating, causing a diffraction efficiency of the additional diffraction orders induced on the other side of the first strip grating to be maximized.

Optionally, the groove includes a groove bottom and a groove wall extending from the groove bottom;
the groove wall includes an opposing first surface and second surface, the first surface and the groove bottom form a first included angle A1, the second surface and the groove bottom form a second included angle A2, the first included angle A1 and the second included angle A2 are from 0° to 180°;
an included angle between the groove bottom and a side edge along a length direction of the first strip grating is from 0° to 89°;
dimensions of the first surface and the second surface along the width direction of the first strip grating are from 0 to 1000 nm.

Optionally, the plurality of sub-out-coupling areas include a two-dimensional grating area and one-dimensional grating areas;
wherein, the two-dimensional grating area is located in a middle portion of the out-coupling area;
at least two one-dimensional grating areas are disposed on opposite sides of the two-dimensional grating area;
the transition grating area is located between the two-dimensional grating area and the respective one-dimensional grating areas.

Optionally, the two-dimensional grating area includes a plurality of parallelogram gratings, and the plurality of parallelogram gratings are arranged to form a first target shape;
the one-dimensional grating area includes a plurality of second strip gratings, and the second strip gratings are not provided with the groove, and the plurality of second strip gratings are arranged to form a second target shape.

Optionally, the out-coupling area is provided on one surface of the light-guiding substrate;
within the out-coupling area: the opposite sides of a grating structure each form an included angle with the surface of the light-guiding substrate, and the included angle is 20° to 160°; or, the grating structure is a stepped grating.

In a second aspect, the present application provides an optical module. The optical module includes:
the light-guiding device according to the first aspect; and
a light engine, the light engine being configured to project light or an image into the light-guiding device.

In a third aspect, the present application provides a head-mounted display device. The head-mounted display device includes:
a housing; and
the optical module according to the second aspect.

The beneficial effects of the present application are as follows:

According to the light-guiding device provided by the embodiments of the present application, which is a diffractive optical waveguide solution, by introducing, into the out-coupling area, a strip grating having grooves disposed on opposite sides thereof, the grooves induce additional diffraction orders, thereby breaking the inherent one-dimensional grating characteristics of the strip grating and forming a transition grating structure between a two-dimensional grating and a one-dimensional grating. When applied to the out-coupling area, this configuration facilitates reasonable distribution of light energy within the out-coupling area, resulting in superior imaging quality and high optical efficiency.

Other features and advantages of the present application will become apparent from the following detailed description of exemplary embodiments of the present application with reference to the accompanying drawings.

### BRIEF DESCRIPTION OF THE DRAWINGS

In order to more clearly illustrate the technical solutions according to the embodiments of the present application or the prior art, a brief description of the accompanying drawings referred to herein is given below. It should be understood that the drawings illustrate only exemplary embodiments of the present application, and that a person of ordinary skill in the art may derive other embodiments from the disclosed drawings without inventive effort.
FIG. 1 is a top view of a light-guiding device provided by an embodiment of the present application;
FIG. 2 is another top view of a light-guiding device provided by an embodiment of the present application;
FIG. 3 is a top view of a partitioned design of an out-coupling area of a light-guiding device provided by an embodiment of the present application;
FIG. 4 is a diagram illustrating the pupil-expansion effect when the out-coupling area is not partitioned and is entirely provided with two-dimensional gratings;
FIG. 5 is a schematic structural diagram of a first strip grating provided by an embodiment of the present application;
FIG. 6 is another schematic structural diagram of a first strip grating provided by an embodiment of the present application;
FIG. 7 is yet another schematic structural diagram of a first strip grating provided by an embodiment of the present application;
FIG. 8 is still another schematic structural diagram of a first strip grating provided by an embodiment of the present application;
FIG. 9 is a schematic structural diagram of a groove provided by an embodiment of the present application;
FIG. 10 is another schematic structural diagram of a groove provided by an embodiment of the present application;
FIG. 11 is a schematic structural diagram of a groove provided by an embodiment of the present application;
FIG. 12 is another schematic structural diagram of a groove provided by an embodiment of the present application;
FIG. 13 is yet another schematic structural diagram of a groove provided by an embodiment of the present application;
FIG. 14 is a side view of a light-guiding device provided by an embodiment of the present application.

### Description of Reference Signs:

1: light-guiding substrate; 2: in-coupling area; 3: out-coupling area; 31: first strip grating; 311: side edge; 301: two-dimensional grating area; 302: one-dimensional grating area; 303: transition grating area; 4: groove; 41: groove bottom; 42: first surface; 43: second surface; 01: first light; 02: second light; 03: third light; 1001: first diffracted light; 1002: second diffracted light; 1003: first out-coupled light; 1004: third diffracted light; 1005: second out-coupled light.

### DETAILED DESCRIPTION

Various exemplary embodiments of the present application will now be described in detail with reference to the accompanying drawings. It should be noted that, unless otherwise specified, the relative arrangements of components and steps, as well as numerical expressions and values set forth in these embodiments, are not intended to limit the scope of the present application.

The following description of at least one exemplary embodiment is purely illustrative and does not limit the application or use of the present invention in any way.

Well-known techniques and devices in the relevant field are not described in detail herein; however, where appropriate, such techniques and devices are considered part of this disclosure.

All specific values presented in the examples herein are to be understood as merely illustrative and not as limitations. Accordingly, other exemplary embodiments may employ different values.

Similar reference numerals denote like elements throughout the drawings. Once an element is defined in one figure, it will not be redundantly described in subsequent figures.

The light-guiding device, optical module, and head-mounted display device according to embodiments of the present application will now be described in detail with reference to the drawings.

According to one aspect of the embodiments of the present application, a light-guiding device is provided. The light-guiding device is, for example, a diffractive optical waveguide solution, which may be suitable for application in a wearable device. The wearable device includes a head-mounted display (HMD) device, such as an AR head-mounted display device.

Specific forms of the head-mounted display device include, for example, smart glasses or smart helmets, etc. The embodiments of the present application do not impose limitations on the specific form of the head-mounted display device.

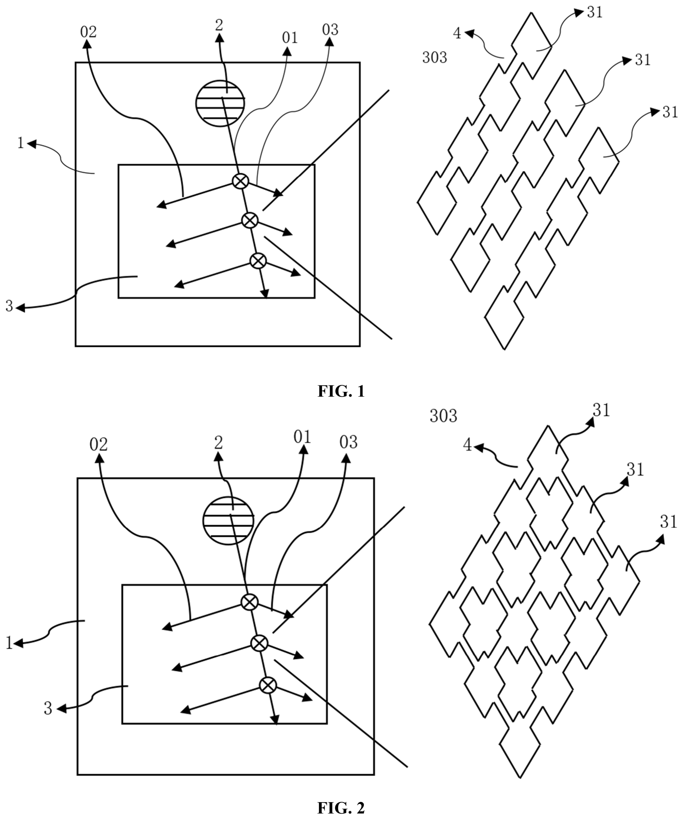

According to an embodiment of the present application, a light-guiding device is provided. Referring to FIG. 1 and FIG. 2, the light-guiding device includes a light-guiding substrate 1 and an in-coupling area 2 and an out-coupling area 3 provided on the light-guiding substrate 1. The out-coupling area 3 is configured to perform pupil expansion on light from the in-coupling area 2 and couple it out; the out-coupling area 3 includes at least one first strip grating 31 with a groove 4, and the groove 4 is provided as at least two and are disposed on opposite sides of the first strip grating 31, the groove 4 being capable of being used to induce additional diffraction orders from the first strip grating 31 and form a target diffraction efficiency corresponding to the diffraction orders, so that light propagating to the position of the first strip grating 31 can be changed from originally diffracting on a single side of the first strip grating 31 to having additional diffraction orders induced on the other side of the first strip grating 31.

According to the above embodiment of the present application, the light-guiding device is, for example, a diffractive optical waveguide solution, which can be applied in technical fields such as augmented reality. Here, the in-coupling area 2 is provided with an in-coupling grating. The in-coupling grating can be, for example, a holographic body or a photonic crystal, etc., and can be used to couple external light, such as light projected by a light engine, into the light-guiding substrate 1, and enable the coupled-in light to propagate via total internal reflection within the light-guiding substrate 1 to the out-coupling area 3. The out-coupling area 3 has the function of both pupil expansion and coupling out light.

Here, the out-coupling area 3 is designed to have at least one first strip grating 31 with a groove 4. The shape of this first strip grating 31 can be seen in FIG. 1 and FIG. 2. By introducing the design of grooves on opposite sides of the strip grating, the original one-dimensional grating characteristics of the strip grating can be broken, enabling light incident on the strip grating with grooves to undergo diffraction on both sides of the strip grating.

It should be noted that, for the first strip grating 31, the diffraction efficiency of the newly added diffraction orders is related to the arrangement of the grooves 4 on the first strip grating 31 and/or the shape of the grooves 4 themselves. Among these, the shape of the groove 4 is mainly influenced by the groove depth and the groove width. The diffraction efficiency of the newly added diffraction orders can be different from the diffraction efficiency of the original diffraction orders. For example, the diffraction efficiency of the newly added diffraction orders is less than the diffraction efficiency of the original diffraction orders.

According to the light-guiding device provided by the embodiments of the present application, the out-coupling area 3 can adopt a partitioned design, wherein the first strip grating 31 with grooves 4 is provided in at least one of the sub-areas. In terms of diffraction performance, this first strip grating 31 is between a two-dimensional grating and a one-dimensional grating. Referring to FIG. 1 to FIG. 3, a transition grating between a two-dimensional grating and a one-dimensional grating is formed within the out-coupling area 3. The application of this transition grating within the out-coupling area 3 enables the formation of a more reasonable and finer partition in the out-coupling area 3. The light after pupil expansion forms a more reasonable light energy distribution in the out-coupling area 3, which is beneficial for improving imaging quality.

For example, referring to FIG. 1 and FIG. 2, first light 01 from the in-coupling area 2 propagates within the light-guiding substrate 1 in a state of total internal reflection to the out-coupling area 3. The first light 01 undergoes diffraction at the position of the first strip grating 31, generating second light 02 according to the original diffraction orders of the first strip grating 31. Furthermore, because the first strip grating 31 is provided with grooves 4, third light 03 is additionally generated. The generation of this third light 03 is directly related to the grooves 4 on the first strip grating 31. The shape of the grooves 4 and their layout on the first strip grating 31 can be pre-designed as needed to adjust the diffraction efficiency of the additionally induced diffraction orders. This facilitates more reasonable adjustment of the diffraction behavior of the pupil-expanded light in the out-coupling area 3, benefits the reasonable distribution of light energy, and can also improve optical efficiency.

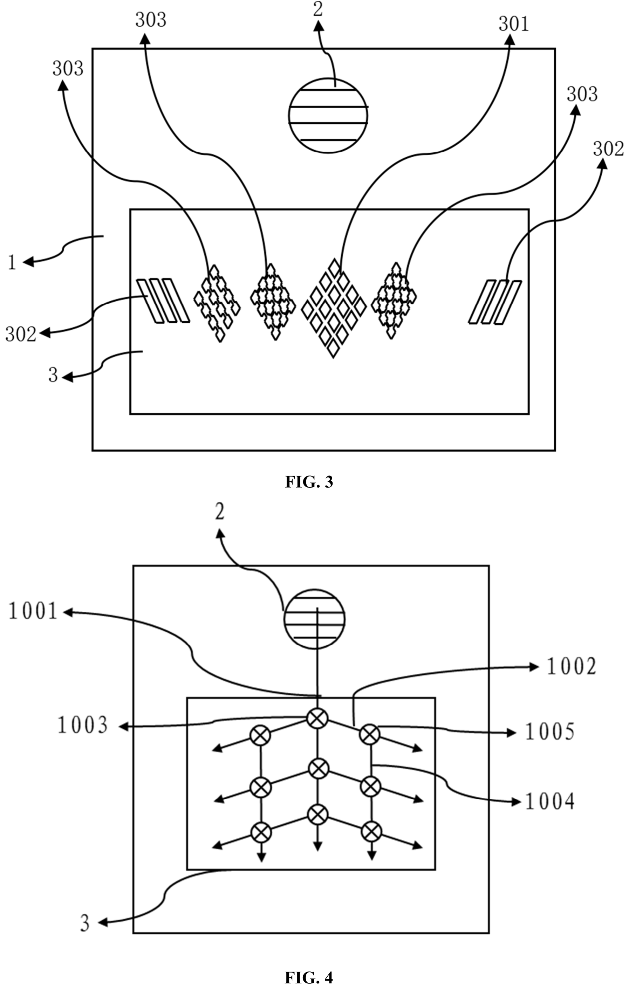

Referring to FIG. 4, which illustrates the optical behavior of a non-partitioned out-coupling area 3 designed as a two-dimensional grating. The in-coupling area 2 in FIG. 4 is used to receive light projected by an external light engine and couples the light into the light-guiding substrate, generating first diffracted light 1001 propagating towards the out-coupling area 3, i.e., the two-dimensional grating area. When this first diffracted light 1001 is incident on the out-coupling area 3, it propagates second diffracted light 1002 towards both sides, first out-coupled light 1003, and continues propagating along the original direction. When the second diffracted light 1002 is again incident on the out-coupling area 3, it generates third diffracted light 1004 and second out-coupled light 1005. Here, the diffraction direction of the third diffracted light 1004 is the same as that of the first diffracted light 1001, and the second diffracted light 1002 continues to propagate along its original direction. When light such as the first diffracted light 1001 and the third diffracted light 1004 is incident on the out-coupling area 3, it generates out-coupled diffracted light while simultaneously continuing to propagate forward. Because all grating structures within the out-coupling area 3 shown in FIG. 4 have identical shapes, the efficiency of the out-coupling behavior for the first out-coupled light 1003, the second out-coupled light 1005, and other identical out-coupling light rays is consistent. This prevents adjustment of the light energy distribution within the out-coupling area, potentially leading to ineffective utilization of light energy and reduced optical efficiency.

The light-guiding device provided by the embodiments of the present application improves the out-coupling area 3 by introducing the first strip grating 31 with grooves 4 into the out-coupling area 3. This design enhances the diffraction orders of the strip grating, enabling the strip grating, which originally only diffracted light on one side, to exhibit light diffraction behavior on both sides, and with different diffraction efficiencies on each side. This forms a transition grating between a two-dimensional grating and a one-dimensional grating, thereby achieving the effect of reasonably distributing light within the out-coupling area 3.

According to the light-guiding device provided by the embodiments of the present application, which is a diffractive optical waveguide solution, by introducing at least one first strip grating 31 with grooves 4 into the out-coupling area 3, and by providing one or more grooves 4 on opposite sides of this first strip grating 31 respectively, the introduction of the grooves 4 induces additional diffraction orders of the first strip grating 31. This can break the original one-dimensional grating characteristics of the strip grating, forming a transition grating structure between a two-dimensional grating and a one-dimensional grating. When applied to the out-coupling area 3, it facilitates reasonable distribution of light energy within the out-coupling area 3, resulting in good final imaging picture quality and high optical efficiency.

It is emphasized that traditional strip gratings exhibit the characteristics of one-dimensional gratings. However, by providing at least one groove 4 on them, the original one-dimensional grating characteristics can be broken. This enables the first strip grating 31 provided with the groove 4 to possess diffraction orders in another direction, thereby allowing the optical behavior of diffraction to occur along two different directions, which can strengthen the light energy in the other direction.

In the light-guiding device provided by the embodiments of the present application, the in-coupling area 2 and the out-coupling area 3 can be located on the same surface of the light-guiding substrate 1, or can be respectively provided on opposite surfaces of the light-guiding substrate 1. That is to say, the in-coupling area 2 and the out-coupling area can be placed on the upper surface or the lower surface of the light-guiding substrate in any permutation and combination, which is not limited in the present application.

The light-guiding device provided by the embodiments of the present application is, for example, a diffractive optical waveguide. The diffraction grating in the in-coupling area 2 and the diffraction grating in the out-coupling area 3 can form a closed grating vector polygon. Here, the in-coupling area 2 can be composed of a single one-dimensional or two-dimensional grating or multiple one-dimensional or two-dimensional gratings. The out-coupling area 3 can be composed of a single two-dimensional grating or multiple one-dimensional or two-dimensional gratings.

The direction of a one-dimensional grating vector is perpendicular to its grating lines, which is the direction of its periodic variation, and its length is equal to the reciprocal of the grating period. Two-dimensional gratings exhibit periodic distribution in both horizontal and vertical directions.

In some examples of the present application, referring to FIG. 3, the out-coupling area 3 includes a plurality of mutually independent sub-out-coupling areas; the first strip grating 31 is provided in plurality, and is located in at least one of the sub-out-coupling areas to form a transition grating area 303 between a two-dimensional grating area and a one-dimensional grating area.

According to the above examples, the out-coupling area 3 is of a partitioned design and may include a plurality of sub-out-coupling areas, which can be identical or different. Among the plurality of sub-out-coupling areas, at least one sub-out-coupling area is provided with a certain number of first strip gratings 31 with grooves 4. In terms of diffraction performance, this sub-out-coupling area thus forms a region between a two-dimensional grating area and a one-dimensional grating area. In this way, within the out-coupling area 3, the light energy after pupil expansion can be distributed more reasonably, which can improve the optical efficiency of the entire light-guiding device.

When providing grooves 4 on the first strip grating 31, by designing the groove depth and/or groove width of the grooves 4, the proportion of diffraction efficiency of the additional diffraction orders induced on the other side of this first strip grating 31 can be designed, ultimately achieving the purpose of reasonably utilizing light energy.

According to the above examples, within the out-coupling area 3, one or multiple sub-out-coupling areas containing the first strip grating 31 can be provided, which is not limited in the embodiments of the present application.

In some examples of the present application, in one sub-out-coupling area, the first strip grating 31 is provided in plurality; wherein, referring to FIG. 1, the plurality of first strip gratings 31 are adjacent and spaced apart from each other, to form a partitioned arrangement within the sub-out-coupling area; or, referring to FIG. 2, the plurality of first strip gratings 31 are adjacent and sequentially connected to each other, to form an integral whole within the sub-out-coupling area.

For example, referring to the right side of FIG. 1, a sub-out-coupling area within the out-coupling area 3 is shown. This sub-out-coupling area can be provided with, for example, three first strip gratings 31, and intervals are provided between adjacent first strip gratings 31. That is, each of the first strip gratings 31 is independent, and a plurality of grooves 4 are respectively provided on opposite sides along the length direction of each first strip grating 31.

As another example, referring to the right side of FIG. 2, a sub-out-coupling area within the out-coupling area 3 is shown. This sub-out-coupling area is provided with three first strip gratings 31, and adjacent first strip gratings 31 are connected to each other. A plurality of grooves 4 are respectively provided on opposite sides along the length direction of each first strip grating 31, and finally all the first strip gratings 31 in this sub-out-coupling area form a diamond-shaped appearance.

In some examples of the present application, a width of the first strip grating 31 is L, and a groove depth of the groove 4 is ≤ L; when the groove depth of the groove 4 is L, the groove 4 extends through the first strip grating 31 in a width direction of the first strip grating 31, causing the diffraction efficiency of the additional diffraction orders induced on the other side of the first strip grating 31 to be maximized.

If the groove depth of the groove 4 is larger, then the diffraction efficiency of the additional diffraction orders induced on the other side of the first strip grating 31 provided with this groove 4 is higher. When the groove 4 completely extends through the first strip grating 31 in the width direction, the diffraction efficiency of the additional diffraction orders induced by the first strip grating 31 reaches a maximum value.

It should be noted that when the groove depth of the groove 4 is 0, that is, when no groove is made on the first strip grating 31, the first strip grating 31 maintains the diffraction characteristics of a one-dimensional grating.

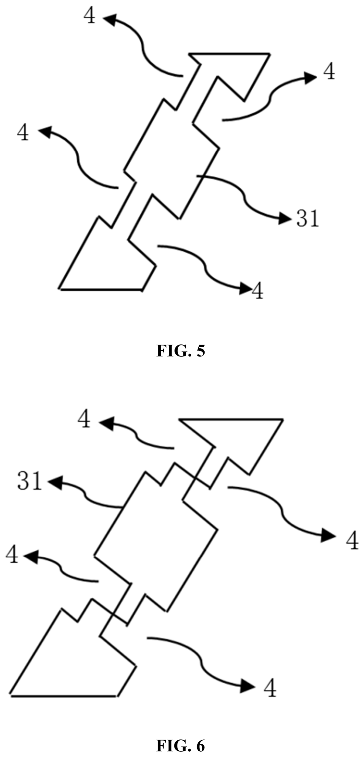

Here, in a case where a plurality of grooves 4 are provided on the first strip grating 31, the plurality of grooves 4 are designed to be arranged at intervals along a length direction of the first strip grating 31, and the plurality of grooves 4 are disposed on opposite sides of the strip grating 31, see FIG. 5 to FIG. 7.

The grooves 4 on the two sides of the first strip grating 31 can be arranged symmetrically, including axisymmetric and centrally symmetric. Certainly, the grooves 4 on the two sides of the first strip grating 31 can also be arranged asymmetrically. This provides higher design freedom for the formed transition grating area.

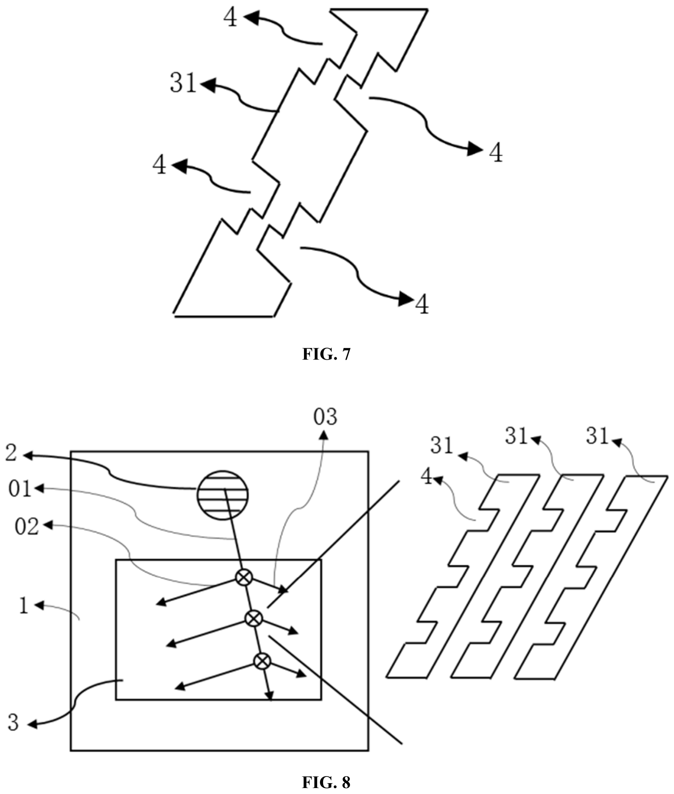

Optionally, for the first strip grating 31 provided with the grooves 4, an additional groove can be made within the groove 4, see FIG. 6 and FIG. 7, which provides more ways for adjusting the diffraction efficiency.

Furthermore, referring to FIG. 8, in a case where a plurality of grooves 4 are provided on the strip grating 31, the plurality of grooves 4 are arranged at intervals along the length direction of the first strip grating 31, and the plurality of grooves 4 can also all be located on the same side of the first strip grating 31.

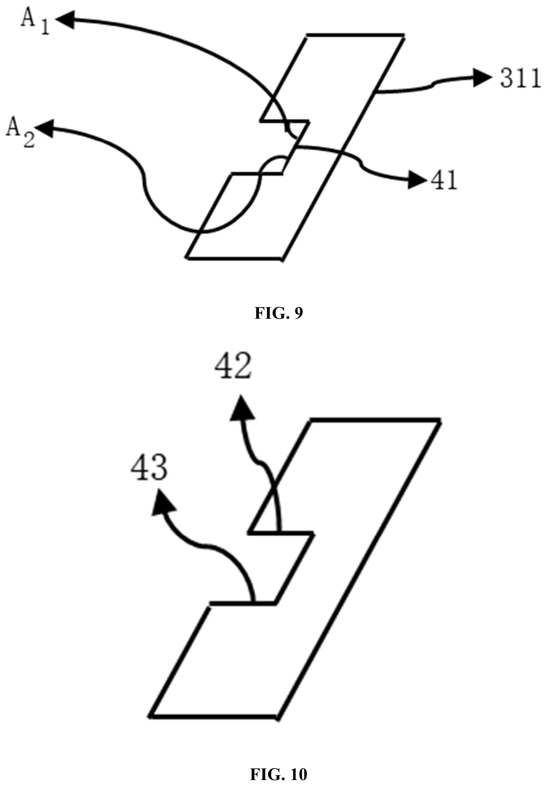

In some examples of the present application, referring to FIG. 9, the groove 4 includes a groove bottom 41 and a groove wall extending from the groove bottom 41; wherein, referring to FIG. 10, the groove wall includes an opposing first surface 42 and second surface 43, the first surface 42 and the groove bottom 41 form a first included angle A1, the second surface 43 and the groove bottom 41 form a second included angle A2, the first included angle A1 and the second included angle A2 are from 0° to 180°; an included angle between the groove bottom 41 and a side edge 311 along a length direction of the first strip grating 31 is from 0° to 89°.

Referring to FIG. 10, dimensions of the first surface 42 and the second surface 43 along the width direction of the first strip grating 31 are from 0 to 1000 nm.

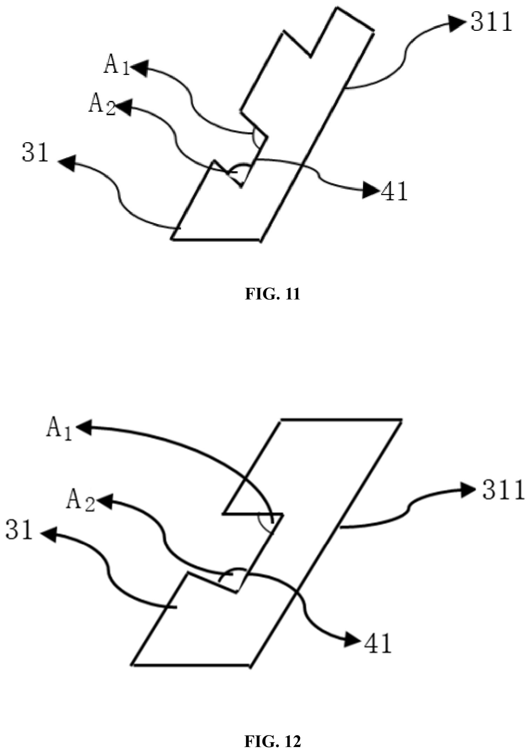

For example, referring to FIG. 11, a shape of the groove 4 is shown, wherein the first included angle A1 is 120°, the second included angle A2 is 60°, and the included angle between the groove bottom 41 and the side edge 311 along the length direction of the first strip grating 31 is 0°.

As another example, referring to FIG. 12, another shape of the groove 4 is shown, wherein the first included angle A1 is 60°, the second included angle A2 is 90°, and the included angle between the groove bottom 41 and the side edge 311 along the length direction of the first strip grating 31 is 0°.

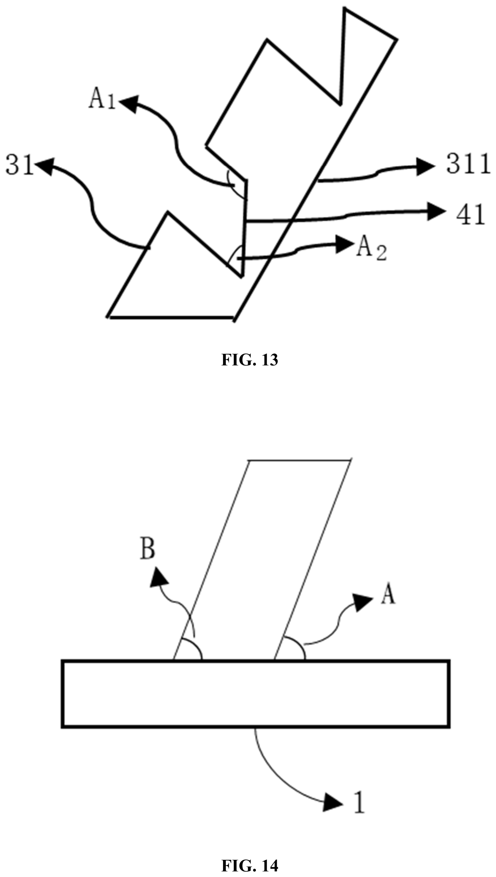

As yet another example, referring to FIG. 13, yet another shape of the groove 4 is shown, wherein the first surface 42 and the second surface 43 are parallel, and an included angle between the groove bottom 41 and the side edge 311 along the length direction of the first strip grating 31 is 30°.

It is emphasized that the provision of the grooves 4 primarily serves to increase the diffraction orders of the strip grating. Grooves of different shapes and quantities will affect the diffraction efficiency of the additionally induced diffraction orders of the strip grating.

In an example of the present application, referring to FIG. 3, the plurality of sub-out-coupling areas include a two-dimensional grating area 301 and one-dimensional grating areas 302; wherein, the two-dimensional grating area 301 is located in a middle portion of the out-coupling area 3; the one-dimensional grating areas 302 are provided as at least two and are disposed on opposite sides of the two-dimensional grating area 301; the transition grating area 303 is located between the two-dimensional grating area 301 and the one-dimensional grating areas 302.

According to the above example, the two-dimensional grating area 301 includes a plurality of parallelogram gratings, and the plurality of parallelogram gratings are arranged to form a first target shape; the one-dimensional grating area 302 includes a plurality of second strip gratings, and the second strip gratings are not provided with the groove 4, the plurality of second strip gratings are arranged to form a second target shape.

The out-coupling area 3 needs to have both pupil expansion and out-coupling functions. According to the above example, the out-coupling area 3 includes different types of gratings arranged in partitions, and introduces a transition grating area, whose diffraction behavior is between the two, between the two-dimensional grating area and the one-dimensional grating area. The transition grating area is a type of two-dimensional grating structure design that can enhance optical performance.

Referring to FIG. 3, a two-dimensional grating is provided in the center of the out-coupling area 3 to perform two-dimensional pupil expansion on the central field of view light, while one-dimensional gratings are used at the outermost edges of the out-coupling area 3 to couple out the light. Furthermore, in the transition region from the center to the edges, the first strip grating 31 with grooves 4 is used to transition the diffraction behavior, enabling a reasonable transition of light energy from the central field of view to the edge field of view across the entire out-coupling area 3. Thus, the light energy in the out-coupling area 3 can be reasonably distributed, improving light efficiency.

In an example of the present application, referring to FIG. 14, the out-coupling area 3 is provided on one surface of the light-guiding substrate 1; within the out-coupling area 3: each of the opposite sides of a grating structure respectively forms an included angle A, B with the surface of the light-guiding substrate 1, and the included angle is from 20° to 160°; or, the grating structure is a stepped grating.

According to the grating structure design of the out-coupling area in the above example, an anti-light-leakage effect can be formed in the out-coupling area 3, providing users with a better immersive experience.

According to another aspect of the embodiments of the present application, an optical module is provided. The optical module includes the light-guiding device as described above and a light engine; wherein, the light engine is configured to project light or an image into the light-guiding device.

The light energy within the entire out-coupling area 3 can be distributed more flexibly and reasonably from the middle to the edges, creating a gradual transition of light energy in the out-coupling area 3, which can enhance the diffraction efficiency of the out-coupling area 3, thereby improving imaging quality.

Here, the imaging light emitted by the light engine should be able to cover the entire in-coupling area 2.

Here, the imaging light emitted by the light engine can be monochromatic light or multicolor light.

According to yet another aspect of the embodiments of the present application, a head-mounted display device is further provided. The head-mounted display device includes a housing and the optical module as described above.

The head-mounted display device is, for example, an AR head-mounted apparatus, including AR glasses or AR helmets, etc., which is not specifically limited in the embodiments of the present application.

Specific implementations of the optical module and the head-mounted display device of the embodiments of the present application can refer to the various embodiments of the light-guiding device described above, and thus have at least all the beneficial effects brought by the technical solutions of the aforementioned embodiments, which will not be repeated herein.

The foregoing embodiments have focused on describing the differences between the various embodiments. Different optimization features between the various embodiments, as long as they are not contradictory, may be combined to form better embodiments. Considering the brevity of the text, this will not be repeated here.

Although some specific embodiments of the present application have been described in detail through examples, those skilled in the art should understand that the above examples are for illustration only and are not intended to limit the scope of the present application. Those skilled in the art should understand that modifications can be made to the above embodiments without departing from the scope and spirit of the present application. The scope of the present application is defined by the appended claims.

## Claims

1. A light-guiding device, **characterized by** comprising a light-guiding substrate (1) and an in-coupling area (2) and an out-coupling area (3) provided on the light-guiding substrate (1);
the out-coupling area (3) is configured to perform pupil expansion on light from the in-coupling area (2) and couple it out; and
the out-coupling area (3) comprises at least one first strip grating (31) with grooves (4), and at least two grooves (4) are provided on opposite sides of the first strip grating (31), the grooves (4) being capable of being used to induce additional diffraction orders from the first strip grating (31) and form a target diffraction efficiency corresponding to the additional diffraction orders, so that light propagating to the position of the first strip grating (31) can be changed from originally diffracting on a single side of the first strip grating (31) to having additional diffraction orders induced on the other side of the first strip grating (31).

2. The light-guiding device according to claim 1, **characterized in that** the out-coupling area (3) comprises a plurality of mutually independent sub-out-coupling areas; and
the first strip grating (31) is provided in plurality, and is located in at least one of the sub-out-coupling areas to form a transition grating area (303) between a two-dimensional grating area and a one-dimensional grating area.

3. The light-guiding device according to claim 2, **characterized in that**, in one sub-out-coupling area, the first strip grating (31) is provided in plurality;
wherein, the plurality of first strip gratings (31) are adjacent and spaced apart from each other, to form a partitioned arrangement within the sub-out-coupling area; or,
the plurality of first strip gratings (31) are adjacent and sequentially connected to each other, to form an integral whole within the sub-out-coupling area.

4. The light-guiding device according to any one of claims 1 to 3, **characterized in that** a width of the first strip grating (31) is L, and a groove depth of the groove (4) is ≤ L;
when the groove depth of the groove (4) is L, the groove (4) extends through the first strip grating (31) in a width direction of the first strip grating (31), causing a diffraction efficiency of the additional diffraction orders induced on the other side of the first strip grating (31) to be maximized.

5. The light-guiding device according to any one of claims 1 to 3, **characterized in that** the groove (4) comprises a groove bottom (41) and a groove wall extending from the groove bottom (41);
the groove wall comprises an opposing first surface (42) and second surface (43), the first surface (42) and the groove bottom (41) form a first included angle A1, the second surface (43) and the groove bottom (41) form a second included angle A2, the first included angle A1 and the second included angle A2 are from 0° to 180°;
an included angle between the groove bottom (41) and a side edge (311) along a length direction of the first strip grating (31) is from 0° to 89°;
dimensions of the first surface (42) and the second surface (43) along the width direction of the first strip grating (31) are from 0 to 1000 nm.

6. The light-guiding device according to claim 2, **characterized in that** the plurality of sub-out-coupling areas comprise a two-dimensional grating area (301) and one-dimensional grating areas (302);
wherein, the two-dimensional grating area (301) is located in a middle portion of the out-coupling area (3);
there are provided at least two one-dimensional grating areas (302) which are disposed on opposite sides of the two-dimensional grating area (301);
the transition grating area (303) is located between the two-dimensional grating area (301) and the respective one-dimensional grating areas (302).

7. The light-guiding device according to claim 6, **characterized in that** the two-dimensional grating area (301) comprises a plurality of parallelogram gratings, and the plurality of parallelogram gratings are arranged to form a first target shape;
the one-dimensional grating area (302) comprises a plurality of second strip gratings, and the second strip gratings are not provided with the groove (4), and the plurality of second strip gratings are arranged to form a second target shape.

8. The light-guiding device according to claim 1, **characterized in that** the out-coupling area (3) is provided on one surface of the light-guiding substrate (1);
within the out-coupling area (3): the opposite sides of a grating structure each form an included angle with the surface of the light-guiding substrate (1), and the included angle is 20° to 160°; or, the grating structure is a stepped grating.

9. An optical module, **characterized by** comprising:
the light-guiding device according to any one of claims 1 to 8; and
a light engine, the light engine being configured to project light or an image into the light-guiding device.

10. A head-mounted display device, **characterized by** comprising:
a housing; and
the optical module according to claim 9.
